# FASCICULE DE BREVET EUROPEEN

(11) **EP 2 739 447 B1**
(45) Date de publication et mention de la délivrance du brevet: **27.09.2017**
(21) Numéro de dépôt: 12740990.2
(22) Date de dépôt: 31.07.2012
(51) Int. Cl.: B29B 11/16, F16C 7/02, B29C 70/24, B29C 70/48

(54) **BIELLE EN MATERIAU COMPOSITE AYANT UNE TENUE MECANIQUE AUGMENTEE**
VERBUNDPLEUELSTANGE MIT ERHÖHTER MECHANISCHER FESTIGKEIT
COMPOSITE CONNECTING ROD HAVING AN INCREASED MECHANICAL STRENGTH

(30) Priorité: 01.08.2011 FR 1157055
(43) Date de publication de la demande: 11.06.2014
(73) Titulaire: Safran Landing Systems, 78140 Vélizy-Villacoublay (FR); Aircelle, 76700 Gonfeville-l'Orcher (FR)
(72) Inventeur: MASSON, Richard, F-78140 Velizy Villacoublay (FR); GARNIER, Gildas, F-78140 Velizy Villacoublay (FR); DESJOYEAUX, Bertrand, F-76310 Sainte Adresse (FR)
(74) Mandataire: Parzy, Benjamin Alain
(86) Numéro de dépôt international: PCT/EP2012/064975
(87) Numéro de publication internationale: WO 2013/017601

(56) Documents cités:
- WO-A2-2010/000990
- FR-A1- 2 893 532

## Description

L'invention concerne un procédé de fabrication d'une bielle en matériau composite formée à partir de tissu de fibres renforçantes telles que des fibres de carbone.

### ARRIERE PLAN DE L'INVENTION

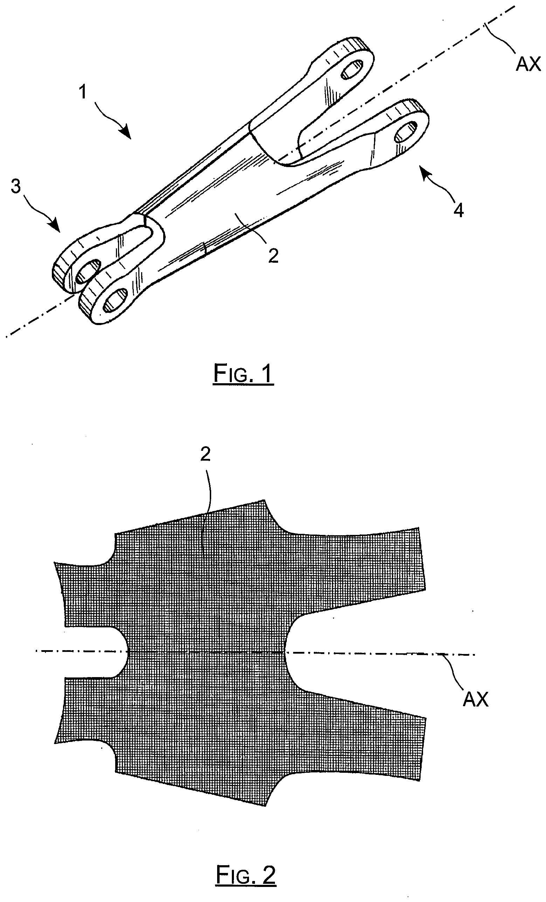

Une telle bielle, représentée dans la figure 1 en y étant repérée par 1, comprend un corps principal creux 2 généralement tubulaire s'étendant selon une direction générale AX, et qui est prolongé à chacune de ses extrémité par une chape double, ces chapes doubles étant ici repérées par 3 et 4.

Selon un procédé connu du document de brevet FR2893532, cette bielle est fabriquée à partir d'une pièce de tissu de fibres renforçantes découpée selon une forme représentée en figure 2. Cette forme comprend une portion centrale pour le corps principal creux 2, et quatre extensions correspondant chacune à une aile de chape double.

Le document WO2010/000990 A2 divulgue également une réalisation de bielle.

Le tissu utilisé est un tissu de fibres de carbone tridimensionnel, c'est-à-dire un tissu d'épaisseur relativement importante formé de fibres renforçantes tissées dans les trois dimensions. Un tel tissu tridimensionnel correspond par exemple au tissu de type 2,5D.

Un tel tissu comporte plusieurs couches de fibres longitudinales et transversales tissées entre elles de façon à ce que les fibres d'une direction s'entrelacent avec les fibres de plusieurs autres couches pour constituer un tissu indissociable.

Eventuellement le tissu est renforcé au niveau des chapes : les fibres des différentes couches ne sont pas entrelacées au niveau des chapes afin de délier les couches entre elles. Ceci permet d'insérer des couches supplémentaires au niveau des chapes pour accroître leur épaisseur.

De nouvelles fibres sensiblement perpendiculaires au plan des couches peuvent ensuite être piquées pour solidariser les différentes couches constituant les chapes.

La fabrication de cette bielle consiste à replier la pièce de tissu de la figure 2 qui est éventuellement renforcée au niveau de ses chapes, en l'appliquant sur un mandrin ou analogue en ramenant l'un contre l'autre ses deux bords opposés. Les bords peuvent alors être raccordés l'un à l'autre, par exemple par piquage, avant d'injecter de la résine dans le tissu de fibres renforçantes et de chauffer l'ensemble pour polymériser cette résine.

L'épaisseur nominale de la paroi formant cette bielle est limitée par l'épaisseur du tissu tridimensionnel qui est utilisé pour la fabriquer, attendu que le choix d'un tissu épais augmente de manière très importante le coût d'un tel tissu, du fait notamment qu'il implique de réduire de façon très importante la vitesse de tissage.

En pratique, compte tenu des coûts de vente en vigueur, il n'est pas envisageable d'utiliser un tissu ayant une épaisseur supérieure à deux ou trois centimètres. Comme on le comprend, cette limitation d'épaisseur se traduit par une limitation des efforts admissibles par la bielle considérée dans son ensemble, aussi bien qu'au niveau de ses chapes.

### OBJET DE L'INVENTION

Le but de l'invention est de proposer une solution pour remédier aux inconvénients ci-dessus.

### RESUME DE L'INVENTION

A cet effet, l'invention a pour objet un procédé de fabrication d'une bielle en matériau composite à partir de tissu de fibres renforçantes tridimensionnel, cette bielle s'étendant selon une direction principale, comprenant les opérations de :
- découpage d'une ou plusieurs pièces de base dans un ou plusieurs tissus tridimensionnels ;
- découpage d'une ou plusieurs pièces de renforcement dans un ou plusieurs tissus tridimensionnels ;
- installation des différentes pièces sur un support pour les mettre en forme dans une configuration selon laquelle les pièces de base et les pièces de renforcement se superposent ;
- solidarisation des différentes pièces les unes avec les autres par couture en piquant des fibres renforçantes pour constituer une préforme de fibres renforçantes ;
- installation de la préforme sur un mandrin ;
- injection de résine dans la préforme et polymérisation de cette résine.

Avec cette solution, on réalise une préforme ayant une épaisseur significativement supérieure à l'épaisseur du tissu de fibres renforçantes utilisé.

L'invention concerne également un procédé tel que défini ci-dessus, dans lequel la solidarisation des différentes pièces comporte au moins une opération de couture d'une paire de bords s'étendant selon la direction principale et appartenant à deux pièces de base distinctes pour solidariser ces deux pièces de base l'une à l'autre.

L'invention concerne également un procédé tel que défini ci-dessus, dans lequel la solidarisation des différentes pièces comporte au moins une opération de couture d'une pièce de renforcement contre une pièce de base pour les solidariser l'une à l'autre.

L'invention concerne également un procédé tel que défini ci-dessus, dans lequel on utilise deux pièces de base et deux pièces de renforcement pour constituer la préforme, et dans lequel la solidarisation des différentes pièces comporte au moins une opération de couture de deux paire de bords superposées et qui s'étendent selon la direction principale, les bords de l'une des paires appartenant à deux pièces de base distinctes, les bords de l'autre paire appartenant à deux pièces de renforcement distinctes, et dans laquelle ces deux paires de bords superposées sont cousues conjointement.

L'invention concerne également un procédé tel que défini ci-dessus, dans lequel les bords qui sont assemblés par couture l'un à l'autre ont des formes biseautées complémentaires dans la région où ils sont cousus l'un à l'autre.

L'invention concerne également un procédé tel que défini ci-dessus, dans lequel on réalise dans une même opération de couture, la solidarisation de deux bords de deux pièces de base l'un à l'autre et à une pièce de renforcement.

L'invention concerne également un procédé tel que défini ci-dessus, dans lequel on réalise dans une même opération de couture, la solidarisation de deux bords de deux pièces de renforcement l'un à l'autre et à une pièce de base.

### BREVE DESCRIPTION DES FIGURES

La figure 1 déjà décrite est une vue d'ensemble d'une bielle connue ;
La figure 2 déjà décrite montre la pièce de tissu utilisée pour fabriquer la bielle de la figure 1 ;
La figure 3 est une vue d'ensemble en perspective de la bielle selon l'invention ;
La figure 4 est une vue montrant la découpe du tissu tridimensionnel pour constituer les pièces de base de la bielle selon l'invention ;
La figure 5 est une vue en section transversale du corps de la bielle selon l'invention ;
La figure 6 est une vue en section transversale du corps de la bielle selon un second mode de réalisation de l'invention ;
La figure 7 est une vue en section transversale du corps de la bielle selon un troisième mode de réalisation de l'invention ;
La figure 8 est une vue en section transversale du corps de la bielle selon un quatrième mode de réalisation de l'invention.

### DESCRIPTION DETAILLEE DE L'INVENTION

L'idée à la base de l'invention est de réaliser une bielle dont la paroi est formée de plusieurs couches de tissu tridimensionnel superposées pour atteindre une épaisseur importante sans devoir recourir à un tissu tridimensionnel épais. En pratique, cette solution permet de réaliser une bielle constituée par une paroi ayant une épaisseur pouvant atteindre huit à dix centimètres tout en ayant un coût de fabrication particulièrement compétitif.

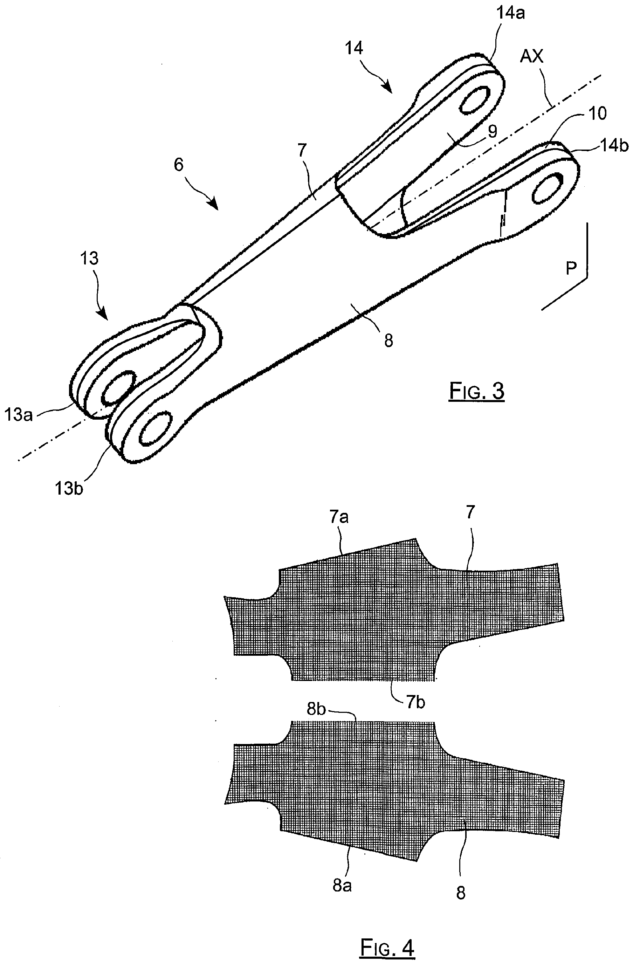

La bielle selon l'invention qui est représentée dans la figure 3 en y étant repérée par 6 est constituée à partir de quatre pièces de tissu tridimensionnel, comprenant deux pièces de base 7 et 8, ainsi que deux pièces de renforcement repérées par 9 et 10.

Les deux pièces de base 7 et 8 ont des formes généralement symétriques l'une de l'autre par rapport à un plan P passant par l'axe longitudinal AX de la bielle, seuls leurs bords biseautés étant inversés pour être complémentaires. De manière analogue, les deux pièces de renforcement 9 et 10 ont aussi des formes généralement symétriques l'une de l'autre par rapport à ce plan P.

Comme visible dans la figure 3, cette bielle comprend un corps central 12 généralement tubulaire, prolongé à chacune de ses extrémités par une chape double. Ces chapes qui sont repérées par 13 et 14 comprennent chacune deux ailes, repérées respectivement par 13a, 13b, 14a et 14b.

Chaque pièce de base 7, 8 est fabriquée à partir d'une pièce de tissu tridimensionnel ayant une forme plane délimitée par un contour adapté, représentée en figure 4. La pièce 7 comporte deux bords opposés généralement rectilignes repérés par 7a et 7b, et la pièce 8 comporte deux bords opposés généralement rectilignes repérés par 8a et 8b. Chaque pièce de renforcement 9, 10 est fabriquée à partir d'une pièce de tissu tridimensionnel plan délimitée par un contour généralement rectangulaire voire oblong.

Lorsque les pièces de tissu 7, 8, 9 et 10 ont été obtenues, elles sont d'abord assemblées les unes aux autres. Concrètement, la pièce de renforcement rectangulaire 9 est appliquée et positionnée sur la pièce de base 7, de telle manière qu'elle couvre la portion centrale de celle-ci en s'étendant depuis la région correspondant à l'aile 7a jusqu'à la région correspondant à l'aile de chape 7b.

L'ensemble ainsi formé est ensuite maintenu en position et cousu par piquage, au moyen d'une machine dédiée, avec des fibres renforçantes traversant les deux épaisseurs de tissu tridimensionnel, de manière à solidariser la pièce renforçante 9 à la pièce de base 7.

On procède de manière analogue pour positionner la pièce renforçante 10 à la pièce de base 8, avant de les solidariser l'une à l'autre, également par couture de fibres renforçantes traversant les deux épaisseurs de tissu tridimensionnel.

Lorsque ces deux éléments ont été assemblés, ils sont mis en place sur un support pour leur donner les formes galbées correspondant à la bielle.

Lorsque ces deux ensemble sont en place, le bord 7a et le bord 8a des pièces de base 7 et 8 sont positionnés de manière à être jointifs, et de manière analogue, les bords 7b et 8b sont également jointif, le tout respectant alors une disposition correspondant à celle de la bielle telle que représentée dans la figure 3.

A ce stade, on procède à la couture de chaque paire de bords jointifs, celle-ci étant assurée par piquage de fibres renforçantes pour d'une part solidariser l'un à l'autre le bord 7a avec le bord 8a, et d'autre part solidariser l'un à l'autre le bord 7b avec le bord 8b.

D'une manière générale, l'ensemble des préformes peuvent être positionnées les unes par rapport aux autres sur le mandrin, avant de procéder à une unique opération de couture permettant d'assembler les différentes pièces les unes aux autres.

A ce stade, on a réalisé une préforme constituée par les pièces de base 7 et 8 et par les pièces de renforcement 9 et 10 solidarisées les unes aux autres. Les pièces de renforcement sont situées du côté intérieur de la paroi formant la bielle, en s'étendant chacune depuis une aile de chape jusqu'à une autre aile de chape opposée à la première le long de l'axe AX.

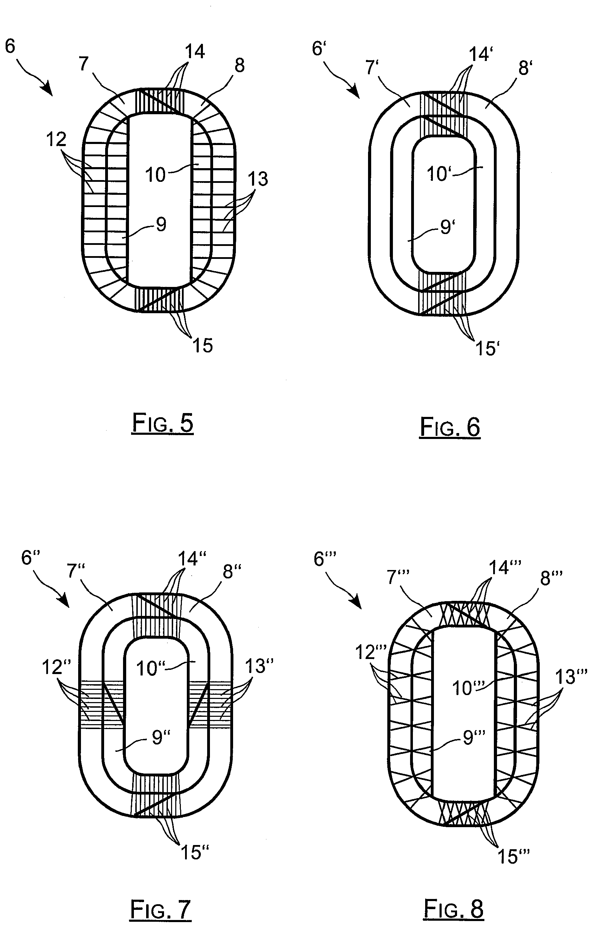

Comme visible dans la section transversale de la figure 5, la pièce renforçante 9 est fixée à la pièce de base 7 par un ensemble de fibres traversantes repérées par 12. De manière analogue, la pièce renforçante 10 est fixé à la pièce de base 8 par un autre ensemble de fibres renforçantes 13.

Les bords 7a et 8a sont solidarisés l'un à l'autre par un ensemble de fibres traversantes 14, et les bords 7b et 8b sont solidarisés l'un à l'autre par un autre ensemble de fibres renforçantes repérées par 15.

Différentes solutions de couture peuvent être adoptées pour solidariser les bords l'un à l'autre. Dans l'exemple de la figure 5, les bords ont des formes biseautées, de sorte qu'ils se recouvrent partiellement l'un l'autre lorsqu'ils sont en position. Dans ces conditions, la couture est réalisée par piquage de fibres selon une direction radiale par rapport à l'axe AX de la bielle, chaque fibre piquée traversant une épaisseur de tissu tridimensionnel biseauté correspondant à la pièce 7 et une épaisseur du tissu tridimensionnel biseauté correspondant à la pièce 8.

Lorsque la préforme est constituée, elle est installée sur un nouveau mandrin, différent du mandrin qui a été utilisé pour les opérations de couture, et ayant une forme correspondant à la forme interne de la bielle. L'ensemble est ensuite installé dans un moule à injection approprié. A ce stade, de la résine est injectée dans l'ensemble de la préforme, et cette résine est ensuite polymérisée, par exemple par chauffage pendant une durée prédéterminée.

Une fois que la pièce brute a été ainsi réalisée, on procède à différentes opérations d'usinage, notamment pour donner aux ailes de chapes leurs formes définitives, et pour percer ces ailes de chapes, avant d'y positionner des bagues métalliques formant paliers.

Comme visible en particulier dans la figure 3, la bielle ainsi formée présente une épaisseur significativement élevée au niveau des ses flancs, de telle manière que cette épaisseur élevée permet de renforcer de manière importante non seulement la bielle dans son ensemble, mais également les ailes de ses chapes, ce qui contribue à réduire la contrainte dans la zone d'introduction des efforts que constituent ces chapes.

Des solutions autres que celles des figures 3 à 5 peuvent avantageusement être envisagées en ce qui concerne l'assemblage par couture des différentes pièces de tissu tridimensionnel pour constituer la préforme.

A cet effet, l'exemple de la figure 6 montre une autre bielle conforme à l'invention, comportant deux pièces de base 7' et 8' et deux pièces de renforcement 9' et 10'. La fabrication de cette bielle ne comporte pas à proprement parler d'étape de solidarisation de chaque pièce de renforcement à une pièce de base correspondante.

Dans l'exemple de la figure 6, les bords opposés des pièces de base sont prévus pour être solidarisés l'un à l'autre par couture, tout comme dans l'exemple des figures 3 à 5. Mais ici, les pièces de renforcement 9' et 10' présentent des bords opposés biseautés destinés à être solidarisé l'un à l'autre par couture.

Lorsque les différentes pièces sont mises en place pour se présenter conformément à la disposition qu'elles adoptent dans la bielle finie, l'une des paires de bords des pièces de base 7' et 8' à solidariser par couture s'étend radialement au dessus d'une des paires de bords des pièces de renforcement 9' et 10' à solidariser par couture en la longeant, ce qui apparaît en partie haute de la figure 6.

De manière analogue, l'autre paire de bords des pièces de base 7' et 8' à solidariser s'étend radialement au dessus de l'autre paire de bords des pièces de renforcement 9' et 10' à solidariser, ce qui apparaît en partie inférieure de la figure 6.

On prévoit alors uniquement une opération de couture des quatre bords de la portion supérieure de la préforme vue en section, et une opération de couture des quatre bords de la portion inférieure de la préforme vue en section, ce qui permet de conjointement solidariser les différentes pièces constituant cette préforme et de solidariser les différents bords les uns aux autres.

D'une manière analogue, il est également possible de décaler angulairement les pièces renforçantes autour de l'axe longitudinal de la bielle, comme représenté schématiquement dans la figure 7.

Dans le cas de la figure 7, la bielle est également formée à partir de deux pièces de base 7", 8" et de deux pièces de renforcement 9" et 10'', mais ces différents composants sont assemblés au moyen de quatre coutures assurant chacune la solidarisation de deux bords l'un à l'autre et à un troisième élément.

Comme visible dans la figure 7, cet assemblage comporte une couture 12" située en partie gauche de la section de bielle et qui traverse la pièce de base 7" ainsi que deux bords contigus des pièces de renforcement 9" et 10''. De manière analogue, une autre couture 13", située en partie droite sur la figure 7 traverse la pièce de base 8'' et deux autres bords contigus des pièces de renforcement 9" et 10''.

Par ailleurs, une couture 14" située en partie supérieure de la section traverse deux bords contigus des pièces de base 7" et 8" ainsi que la pièce renforçante 10''. Une autre couture 15" située en partie inférieure de la section traverse deux autres bords contigus des pièces de base 7" et 8" ainsi que la pièce de renforcement 9.

Comme on le comprend, l'assemblage des différents composants consiste ici à réaliser d'abord les coutures 12" et 13" avant de réaliser les coutures 14" et 15" pour constituer une préforme prête à recevoir un mandrin pour être installée dans un moule à injection en vue de l'injection et la polymérisation de résine.

Dans l'exemple des figures 3 à 5, les pièces de renforcement sont disposées de telle manière qu'elles permettent de renforcer les ailes des chapes de la bielle en augmentant leur épaisseur.

Il est à noter que l'épaisseur des ailes de chapes peut encore être accrue en y insérant des couches de tissu additionnelles. Autrement dit, l'invention n'exclut en rien la possibilité de désolidariser les couches de tissu du tissu tridimensionnel au niveau de chaque chape pour y intercaler des couches de tissu bidimensionnel avant solidariser le tout par piquage de fibres renforçantes transverses.

Comme indiqué plus haut, et visible dans les exemples des différentes figures, les bords qui sont cousus l'un à l'autre ont avantageusement des formes biseautées complémentaires, de sorte que lorsqu'ils sont en position l'un contre l'autre, ils forment conjointement une portion de tissu ayant une épaisseur sensiblement constante et correspondant à l'épaisseur nominale du tissu tridimensionnel dans lequel ils sont fabriqués.

En outre, cette forme biseautée des bords assemblés facilite l'opération de couture puisqu'elle consiste simplement à réaliser des piquages traversant les portions biseautées qui sont superposées l'une à l'autre.

Dans encore un autre mode de réalisation, les pièces de tissus 7, 8, 9 et 10, respectivement 7', 8', 9' et 10', respectivement 7'', 8" 9" et 10'', sont coupées dans des tissus tridimensionnels différents. Ceci permet d'utiliser le matériau ayant les caractéristiques les plus adaptées.

On peut citer par exemple le cas où les pièces 7 et 8 sont réalisées dans un tissu ayant des propriétés particulières en résistance à l'impact, alors que les pièces 9 et 10 sont extraites d'un tissu ayant des propriétés plus élevées en compression.

Dans les exemples illustrés sur les figures, les coutures par piquage sont réalisées de telle manière que les fibres piquées sont orientées radialement par rapport à la direction générale de la bielle. Autrement dit, chaque fibre piquée est orientée selon une direction normale à la face externe de la bielle dans la région de la fibre piquée.

Avantageusement, les fibres peuvent également être piquées selon une ou plusieurs directions obliques par rapport à la direction radiale, de manière à s'opposer aux contraintes de cisaillement interlaminaire pouvant apparaître dans la bielle lorsqu'elle est sollicitée. Dans ce cas, les fibres piquées sont alors inclinées par rapport à la normale à la face externe dans la région de piquage.

La mise en oeuvre d'une telle solution à l'agencement de pièces de la figure 5 est représenté en figure 8. Dans cet exemple, la bielle 6"' comporte une pièce renforçante 9"' fixée à une pièce de base 7''', et de manière analogue, une pièce renforçante 10 fixée à une autre pièce de base 8'''.

Comme visible clairement dans la figure 8, ces différents éléments sont fixés les uns aux autres par des fibres 12"', 13"', 14"' et 15"' qui sont piquées selon différentes directions obliques, de manière à s'opposer efficacement au glissement des couches les unes par rapport aux autres, notamment lorsque la bielle est sollicitée en torsion.

## Revendications

1. Procédé de fabrication d'une bielle (6-6"') en matériau composite à partir de tissu de fibres renforçantes tridimensionnel, cette bielle (6-6"') s'étendant selon une direction principale (AX), comprenant les opérations de :
- découpage d'une ou plusieurs pièces de base (7-7"', 8-8"') dans un ou plusieurs tissus tridimensionnels ;
- découpage d'une ou plusieurs pièces de renforcement (9-9"', 10-10"') dans un ou plusieurs tissus tridimensionnels ;
- installation des différentes pièces (7-7"', 8-8"', 9-9"', 10-10"') sur un support pour les mettre en forme dans une configuration selon laquelle les pièces de base et les pièces de renfort se superposent ;
- solidarisation des différentes pièces (7-7"', 8-8"', 9-9"', 10-10"') les unes avec les autres par couture (12-12"', 13-13"', 14-14"', 15-15"') en piquant des fibres renforçantes, pour constituer une préforme de fibres renforçantes ;
- installation de la préforme sur un mandrin ;
- injection de résine dans la préforme et polymérisation de cette résine.

2. Procédé selon la revendication 1, dans lequel la solidarisation des différentes pièces (7-7"', 8-8''', 9-9"', 10-10"') comporte au moins une opération de couture d'une paire de bords (7a, 8a, 7b, 8b) s'étendant selon la direction principale (AX) et appartenant à deux pièces de base (7-7"', 8-8"') distinctes pour solidariser ces deux pièces de base l'une à l'autre.

3. Procédé selon la revendication 1 ou 2, dans lequel la solidarisation des différentes pièces (7-7"', 8-8"' , 9-9"', 10-10"') comporte au moins une opération de couture d'une pièce de renforcement (9-9"', 10-10"') contre une pièce de base (7-7"', 8-8"') pour les solidariser l'une à l'autre.

4. Procédé selon l'une des revendications précédentes, dans lequel on utilise deux pièces de base (7', 8') et deux pièces de renforcement (9', 10') pour constituer la préforme, et dans lequel la solidarisation des différentes pièces (7', 8', 9', 10') comporte au moins une opération de couture de deux paire de bords superposées et qui s'étendent selon la direction principale (AX), les bords de l'une des paires appartenant à deux pièces de base (7', 8') distinctes, les bords de l'autre paire appartenant à deux pièces de renforcement (9', 10') distinctes, et dans laquelle ces deux paires de bords superposées sont cousues (14', 15') conjointement.

5. Procédé selon la revendication 2 ou 4, dans lequel les bords qui sont assemblés par couture l'un à l'autre ont des formes biseautées complémentaires dans la région où ils sont cousus l'un à l'autre.

6. Procédé selon la revendication 2, dans lequel on réalise dans une même opération de couture, la solidarisation de deux bords de deux pièces de base (7", 8") l'un à l'autre et à une pièce de renforcement (10").

7. Procédé selon la revendication 2, dans lequel on réalise dans une même opération de couture, la solidarisation de deux bords de deux pièces de renforcement (9", 10") l'un à l'autre et à une pièce de base (7").

## Patentansprüche

1. Verfahren zum Herstellen einer Pleuelstange (6-6"') aus einem Verbundwerkstoff anhand eines dreidimensionalen Gewebes aus verstärkten Fasern, wobei sich diese Pleuelstange (6-6"') in einer Hauptrichtung (AX) erstreckt, umfassend die Arbeitsgänge:
- Schneiden eines oder mehrerer Basisteile (7-7"', 8-8"') aus einem oder mehreren dreidimensionalen Geweben;
- Schneiden eines oder mehrerer Verstärkungsteile (9-9"', 10-10"') aus einem oder mehreren dreidimensionalen Geweben;
- Anbringen der verschiedenen Teile (7-7'", 8-8'", 9-9"', 10-10"') an einem Träger, um sie in einer Konfiguration zu formen, in der sich die Basisteile und die Verstärkungsteile überlagern;
- Verbinden der verschiedenen Teile (7-7"', 8-8"', 9-9'", 10-10"') miteinander mittels Nähen (12-12"', 13-13'", 14-14"', 15-15'"), indem verstärkende Fasern hindurchgestochen werden, um einen Vorformling aus verstärkenden Fasern zu bilden;
- Anbringen des Vorformlings auf einem Dorn;
- Einspritzen von Harz in den Vorformling und Polymerisation dieses Harzes.

2. Verfahren nach Anspruch 1, bei dem das Verbinden der verschiedenen Teile (7-7"', 8-8"', 9-9'", 10-10"') mindestens einen Vorgang eines Zusammennähens eines Paares von Rändern (7a, 8a, 7b, 8b) umfasst, die sich in der Hauptrichtung (AX) erstrecken und zu zwei getrennten Basisteilen (7-7'", 8-8"') gehören, um diese beiden Basisteile miteinander zu verbinden.

3. Verfahren nach Anspruch 1 oder 2, bei dem das Verbinden der verschiedenen Teile (7-7'", 8-8"', 9-9"', 10-10'") mindestens einen Nähvorgang eines Verstärkungsteils (9-9"', 10-10"') an ein Basisteil (7-7"', 8-8'") umfasst, um sie miteinander zu verbinden.

4. Verfahren nach einem der vorhergehenden Ansprüche, bei dem man zwei Basisteile (7', 8') und zwei Verstärkclngsteile (9', 10') verwendet, um den Vorformling zu bilden, und bei dem die Verbindung der verschiedenen Teile (7', 8', 9', 10') mindestens einen Nähvorgang von zwei übereinander angeordneten Paaren von Rändern umfasst, die sich in der Hauptrichtung (AX) erstrecken, wobei die Ränder des einen der Paare zu zwei getrennten Basisteilen (7', 8') gehören und wobei die Ränder des anderen Paares zu zwei getrennten Verstärkungsteilen (9', 10') gehören, und bei dem diese beiden übereinander angeordneten Randpaare gemeinsam zusammengeheftet (14', 15') werden.

5. Verfahren nach Anspruch 2 oder 4, bei dem die Ränder, die durch Nähen zusammengefügt werden, in dem Bereich, in dem sie aneinander geheftet werden, komplementäre abgeschrägte Formen haben.

6. Verfahren nach Anspruch 2, bei dem man in einem einzigen Nähvorgang die Verbindung von zwei Rändern von zwei Basisteilen (7", 8") miteinander und mit einem Verstärkungsteil (10") herstellt.

7. Verfahren nach Anspruch 2, bei dem man in einem einzigen Nähvorgang die Verbindung von zwei Rändern von zwei Verstärkungsteilen (9", 10") miteinander und mit einem Basisteil (7") herstellt.

## Claims

1. A method of fabricating a connecting rod (6-6"') out of composite material from three-dimensional fabric of woven reinforcing fibers, the connecting rod (6-6"') extending in a main direction (AX), and the method comprising the operations of:
• cutting out one or more base pieces (7-7"', 8-8"') from one or more different three-dimensional fabrics;
• cutting out one or more reinforcing pieces (9-9"', 10-10"') from one or more different three-dimensional fabrics;
• installing the various pieces (7-7"', 8-8"', 9-9"', 10-10"') on a support in order to shape them in a configuration in which the base pieces and the reinforcing pieces are superposed;
• securing the various pieces (7-7"', 8-8"', 9-9"', 10-10"') to one another by stitching (12-12"', 13-13"', 14-14"', 15-15"') with reinforcing fibers in order to constitute a reinforcing fiber preform;
• installing the preform on a mandrel; and
• injecting resin into the preform and polymerizing the resin.

2. A method according to claim 1, wherein the various pieces (7-7"', 8-8"', 9-9"', 10-10"') are secured to one another by means of at least one operation of stitching together a pair of edges (7a, 8a, 7b, 8b) extending along the main direction (AX), the edges belonging to two distinct base pieces (7-7"', 8-8"') in order to secure those two base pieces to each other.

3. A method according to claim 1 or claim 2, wherein the various pieces (7-7"', 8-8"', 9-9"', 10-10"') are secured to one another by means of at least one operation of stitching a reinforcing piece (9-9"', 10-10"') against a base piece (7-7"', 8-8"') in order to secure them to each other.

4. A method according to any preceding claim, wherein two base pieces (7', 8') and two reinforcing pieces (9', 10') are used to make up the preform, and wherein the various pieces (7', 8', 9', 10') are secured to one another by at least one operation of stitching together two pairs of superposed edges extending in the main direction (AX), the edges of one of the pairs belonging to two different base pieces (7', 8'), and the edges of the other pair belonging to two distinct reinforcing pieces (9', 10'), and wherein these two pairs of superposed edges are stitched together (14', 15') jointly.

5. A method according to claim 2 or claim 4, wherein the edges that are assembled together by stitching are of complementary chamfered shapes in the region where they are stitched together.

6. A method according to claim 2, wherein a single stitching operation is performed to secure two edges of two base pieces (7", 8") to each other and to a reinforcing piece (10").

7. A method according to claim 2, wherein a single stitching operation is used to secure two edges of two reinforcing pieces (9", 10") to each other and to a base piece (7").
